# EUROPÄISCHE PATENTANMELDUNG

(11) **EP 4 080 663 A1**
(43) Veröffentlichungstag der Anmeldung: **26.10.2022**
(21) Anmeldenummer: 21169496.3
(22) Anmeldetag: 20.04.2021
(51) Int. Cl.: H01M 50/46, H01M 50/443, H01M 50/446, H01M 50/449, H01M 50/403, H01M 50/434, H01M 6/04, H01M 6/40, H01M 4/04, H01M 4/08, H01M 4/24, H01M 4/26, H01M 4/50, H01M 6/12

(54) **VERFAHREN UND SET ZUR HERSTELLUNG EINER ZINK-BRAUNSTEIN-ZELLE SOWIE DAMIT HERGESTELLTE ZELLE**

(71) Anmelder: VARTA Microbattery GmbH, 73479 Ellwangen Jagst (DE)
(72) Erfinder: Krebs, Martin, 73494 Rosenberg (DE)
(74) Vertreter: Ostertag & Partner Patentanwälte mbB

(57) **Zusammenfassung**

Zur Herstellung einer Zink-Braunstein-Zelle werden ein erster und ein zweiter elektrischen Leiter auf ein elektrisch nicht leitendes Substrat aufgebracht. Auf diesen werden aus Pasten eine schichtförmige negative und eine schichtförmige positive Elektrode gebildet. Auf die negative Elektrode und/oder auf die positive Elektrode und oder auf einen bereitgestellten schichtförmigen Separator wird anschließend mindestens eine Elektrolytschicht aufgebracht. Es folgt die Bildung eines Schichtstapels mit der Sequenz negative Elektrode /Separator/ positive Elektrode. Die Elektrodenpasten enthalten neben einem Aktivmaterial und einem Elektrodenbinder jeweils ein Lösungs- und/oder Dispergiermittel. Die Paste zur Herstellung der mindestens eine Elektrolytschicht umfasst neben mindestens einem wasserlöslichen, chloridfreien Leitsalz mineralische Partikel und ein Lösungs- und/oder Dispergiermittel, wobei der Anteil an den mineralischen Partikeln in der Paste mindestens 5 Gew.-% und höchstens 60 Gew.-% beträgt. Sie kann in einem Set zusammen mit den Elektrodenpasten geliefert werden. In der fertigen Zelle sind die mineralischen Partikel an Grenzflächen zwischen den Elektroden und dem Separator angeordnet und bilden dort eine für den Elektrolyten durchlässige Grenzschicht.

## Beschreibung

Die nachfolgend beschriebene Erfindung betrifft ein Verfahren sowie ein Set zur Herstellung einer Zink-Braunstein-Zelle. Weiterhin betrifft die Erfindung eine gemäß dem Verfahren sowie eine mit dem Set hergestellte Zelle.

Elektrochemische Zellen umfassen stets eine positive und eine negative Elektrode. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom - meist über einen äußeren Verbraucher-zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären elektrochemischen Zellen ist diese Entladereaktion reversibel, es besteht also die Möglichkeit, die bei der Entladung erfolgte Umwandlung chemischer Energie in elektrische umzukehren. Bei primären Zellen ist die Entladereaktion hingegen irreversibel oder aber eine Wiederaufladung der Zelle verbietet sich aus anderen Gründen.

Der Begriff "Batterie" meinte ursprünglich mehrere in Serie geschaltete elektrochemische Zellen. So wird dies auch im Rahmen der vorliegenden Anmeldung gehandhabt.

Elektrochemische Zellen sind nicht nur durch Zusammenfügen fester Einzelkomponenten herstellbar, vielmehr gewinnen in den letzten Jahren auch verstärkt Zellen an Bedeutung, zu deren Herstellung zumindest einzelne Funktionsteile, insbesondere die Elektroden und/oder erforderlichen Leiterbahnen, durch Druck, also aus einer Lösungs- und/oder Suspensionsmittelhaltigen Paste, hergestellt werden. So hergestellte Zellen sind beispielsweise aus der WO 2006/105966 A1 bekannt.

In der Regel weisen gedruckte elektrochemische Zellen einen mehrschichtigen Aufbau auf. In herkömmlicher Bauweise umfasst eine gedruckte elektrochemische Zelle meist zwei Stromkollektorebenen, zwei Elektrodenebenen und eine Elektrolytebene in stapelartiger Anordnung. Die Elektrolytebene ist dabei zwischen den zwei Elektrodenebenen angeordnet, während die Stromkollektoren die Ober- bzw. die Unterseite der elektrochemischen Zelle bilden. Eine elektrochemische Zelle mit einem solchen Aufbau ist beispielsweise in der US 4119770 A beschrieben.

In der bereits erwähnten WO 2006/105966 A1 sind hingegen deutlich flachere elektrochemische Zellen beschrieben, bei denen sich die Elektroden nebeneinander auf einem flächigen, elektrisch nicht leitenden Substrat befinden (koplanare Anordnung). Die Elektroden sind hierbei über einen ionenleitfähigen Elektrolyten miteinander verbunden, bei dem es sich beispielsweise um eine gelartige Zinkchloridpaste handeln kann. In aller Regel ist der Elektrolyt dabei durch ein vlies- oder netzartiges Material verstärkt und stabilisiert.

Herkömmliche gedruckte Batterien wie die in der WO 2006/105966 A1 beschriebenen eignen sich für viele Anwendungen, sie weisen allerdings eine sehr beschränkte Strombelastbarkeit, insbesondere bei Pulsbelastungen, auf. So stellen beispielsweise Mobilfunkchips hinsichtlich ihres Energieverbrauchs an klassische gedruckte Batterien zu hohe Anforderungen. Dies gilt insbesondere auch für Mobilfunkchips neuerer Generation, die nach dem LTE-Standard (LTE = Long Term Evolution) funken. In Abhängigkeit des gewählten Funkprotokolls müssen zumindest für kurze Zeitfenster Peakströme von bis zu 400 mA zur Verfügungstehen.

Für einen universellen Einsatz müssen gedruckte Batterien möglichst günstig herzustellen sein. Darüber hinaus sind Umweltverträglichkeit und Sicherheit für alle Produkte im Masseneinsatz ein wichtiger Parameter.

### AUFGABE UND LÖSUNG

Der vorliegend beschriebenen Erfindung lag die Aufgabe zugrunde, eine Batterie bereitzustellen, die sicher ist, die kostengünstig gefertigt werden kann, umweltverträglich ist, insbesondere hinsichtlich ihrer Entsorgung keine Probleme bereitet und die dazu in der Lage ist, auch energieintensive Anwendungen wie Mobilfunkchips bedienen zu können, insbesondere auch Mobilfunkchips, die nach dem LTE-Standard arbeiten.

Zur Lösung dieser Aufgabe schlägt die Erfindung das Verfahren zur Herstellung einer Zink-Braunstein-Zelle mit den in Anspruch 1 genannten Merkmalen und das Set zur Herstellung einer Zink-Braunstein-Zelle mit den in Anspruch 7 genannten Merkmalen vor. Auch die Zelle mit den Merkmalen des Anspruchs 9 ist Gegenstand der Erfindung. Weiterbildungen der Erfindung sind Gegenstand von Unteransprüchen.

### Erfindungsgemäßes Verfahren

Das erfindungsgemäße Verfahren weist stets die unmittelbar folgenden Schritte a. bis e. auf:
a. Aufbringen eines ersten elektrischen Leiters auf ein elektrisch nicht leitendes Substrat und eines zweiten elektrischen Leiters auf ein elektrisch nicht leitendes Substrat;
b. Aufbringen einer schichtförmigen negativen Elektrode unmittelbar auf den ersten elektrischen Leiter und einer schichtförmigen positiven Elektrode unmittelbar auf den zweiten elektrischen Leiter;
c. Bereitstellen eines schichtförmigen Separators;
d. Aufbringen mindestens einer Elektrolytschicht auf die schichtförmige negative Elektrode und/oder auf die schichtförmige positive Elektrode und/oder den Separator; und
e. Bilden eines Schichtstapels mit der Sequenz negative Elektrode / Separator / positive Elektrode.

Zum Aufbringen der Elektroden und der mindestens einen Elektrolytschicht werden hierbei Pasten verwendet, die wie folgt definiert sind:
f. Die Paste zur Herstellung der negativen Elektrode umfasst die folgenden Komponenten:
   - Zinkpulver (Quecksilberfrei)
   - Elektrodenbinder
   - Lösungs- und/oder Dispergiermittel
g. Die Paste zur Herstellung der positiven Elektrode umfasst die folgenden Komponenten:
   - Mangandioxid
   - Leitmaterial zur Verbesserung der elektrischen Leitfähigkeit
   - Elektrodenbinder
   - Lösungs- und/oder Dispergiermittel
h. Die Paste zur Herstellung der mindestens einen Elektrolytschicht umfasst die folgenden Komponenten:
   - Mindestens ein wasserlösliches, chloridfreies Leitsalz
   - Mineralische Partikel
   - Lösungs- und/oder Dispergiermittel

Hierbei ist besonders hervorzuheben, dass der Anteil an den mineralischen Partikeln in der Paste erfindungsgemäß mindestens 5 Gew.-% und höchstens 60 Gew.-% beträgt. Weiter bevorzugt beträgt der Mindestanteil an den mineralischen Partikeln mindestens 10 Gew.-%, bevorzugt mehr als 10 Gew.-%, und der Maximalteil höchstens 50 Gew.-%, bevorzugt höchstens 40 Gew.-%.

Die Prozentangaben beziehen hierbei auf das Gesamtgewicht der Paste, also das Gewicht aller Bestandteile der Paste einschließlich des Lösungs- und/oderdes Dispergiermittels. Dies gilt im Folgenden bezüglich aller Prozentangaben im Zusammenhang mit Massenanteilen von Pastenkomponenten.

### Vorteile der Erfindung

Zur Übertragung einer LTE-Nachricht findet zuerst ein Scannen statt. Dabei sucht das Label mögliche Frequenzen für die Datenübertragung. DieserVorgang dauert im Schnitt 2s und benötigt 50 mA. Wenn die Frequenz gefunden wurde, wird ein sogenannter TX-Puls abgesetzt. Ein solcher Puls dauert ca. 150 ms an und benötigt hierfür einen elektrischen Strompuls von etwa 200 mA. Ein Puls mit einer Länge 150 ms entspricht etwa einer Frequenz von 4 Hz. Entsprechend ist für Sendung eines solchen Pulses die Impedanz der erfindungsgemäßen Batterie bei 4 Hz von Bedeutung.

Mit gemäß dem hier beschriebenen Verfahren hergestellte Zellen lassen sich in diesem Zusammenhang besonders gute Ergebnisse erzielen. Der Mechanismus, der zu den guten Werten führt, ist noch nicht abschließend geklärt. Es wird allerdings vermutet, dass der Anteil an den mineralischen Partikeln in der Paste zur Herstellung der mindestens einen Elektrolytschicht hierbei eine Rolle spielt. Diese bilden, wie unten noch beschrieben wird, eine Grenzschichtzwischen den Elektroden und dem Separator. Das in dem Lösungs- und/oder Dispergiermittel gelöste mindestens eine Leitsalz stellt dann den eigentlichen Elektrolyten dar, der den Separator und die Grenzschicht durchdringen kann.

Es ist grundsätzlich bereits bekannt, Elektrolyten mit einem Zusatz an mineralischen Partikeln zu drucken, etwa aus der EP 2 561 564 B1. Allerdings wurden die Partikel bislang als Ersatz für einen Separator eingesetzt, während sie vorliegend zusätzlich zu einem Separator verwendet werden. Es ist denkbar, dass die Grenzschicht die Durchlässigkeit des Separators für Elektrolyt verbessert, da sich durch die Grenzschicht ein Porengefälle einstellt und Poren des Separators nicht durch Partikel der Elektrodenpasten verschlossen werden. Die Gründe für die guten Impedanzwerte sind Gegenstand andauernder Untersuchungen.

Die Wahl eines elektrochemischen Systems mit einer zinkhaltigen negativen Elektrode ist vor allem der geforderten Sicherheit geschuldet. Systeme mit zinkbasierten negativen Elektroden benötigen einen wässrigen Elektrolyten und sind damit nicht brennbar. Darüber hinaus ist Zink umweltverträglich und billig.

### Bevorzugt verwendeter Separator

Der verwendete Separator zeichnet sich in besonders bevorzugten Ausführungsformen durch mindestens eines der unmittelbar folgenden zusätzlichen Merkmale a. bis d. aus:
a. Bei dem verwendeten Separator handelt es sich um eine poröse Kunststofffolie oder um ein poröses Vlies;
b. Der verwendete Separator weist eine Dicke im Bereich von 60 bis 120 µm auf.
c. Der verwendete Separator weist eine Porosität (Verhältnis von Hohlraumvolumen zu Gesamtvolumen) im Bereich von 35 - 60 % auf.
d. Der verwendete Separator besteht aus einem Polyolefin, beispielsweise aus Polyethylen.

Bevorzugt sind die unmittelbar vorstehenden Merkmale a. bis c. in Kombination realisiert. In weiteren bevorzugten Ausführungsformen sind die Merkmale a. bis d. in Kombination realisiert.

### Paste zur Herstellung der mindestens einen Elektrolytschicht

Bei dem mindestens einen wasserlöslichen, chloridfreien Leitsalz handelt es sich insbesondere um mindestens ein Salz aus der Gruppe mit Zinksulfat, Zink-Acetat und Ammoniumsulfat.

Die Paste zur Herstellung der mindestens eine Elektrolytschicht zeichnet sich in besonders bevorzugten Ausführungsformen durch mindestens eines der unmittelbar folgenden zusätzlichen Merkmale a. bis i. aus:
a. Die mineralischen Partikel sind ausgewählt aus der Gruppe mit keramischen Partikeln, in Wasser nahezu oder vollständig unlöslichen Salzpartikeln, Glaspartikeln und Partikeln aus natürlichen Mineralien und Gesteinen wie Basalt.
b. Als mineralische Partikel werden CaCO₃-Partikel verwendet.
c. Die mineralischen Partikel weisen einen d50-Wert im Bereich von 0,8 µm bis 40 µm, bevorzugt im Bereich von 0,8 µm bis 15 µm, besonders bevorzugt im Bereich von 1,0 µm bis 5 µm, auf.
d. Die Paste zur Herstellung der mindestens eine Elektrolytschicht ist im Wesentlichen frei von mineralischen Partikeln mit einer Partikelgröße > 80 µm, bevorzugt > 60 µm, besonders bevorzugt > 45 µm.
e. Die Paste zur Herstellung der mindestens eine Elektrolytschicht umfasst mindestens ein Additiv, insbesondere zur Einstellung ihrer Viskosität, bevorzugt in einem Anteil im Bereich von 1 bis 8 Gew.-%.
f. Als Additiv zur Einstellung der Viskosität umfasst die Paste ein mineralisches Pulver mit einer mittleren Partikelgröße (d50) < 500 nm, bevorzugt < 200 nm.
g. Als Lösungs- und/oder Dispergiermittel wird Wasser verwendet.
h. Der Anteil an dem mindestens einen Leitsalz in der Paste beträgt mindestens 25 Gew.-% und höchstens 50 Gew.-%.
i. Die Paste zur Herstellung der mindestens eine Elektrolytschicht umfasst die folgenden Komponenten in den folgenden Anteilen

| - Das mindestens eine wasserlösliche, chloridfreie Leitsalz, insbesondere das mindestens eine Salz aus der Gruppe mit Zinksulfat, Zink-Acetat und Ammoniumsulfat | |
|---|---|
| | 30 - 40 Gew.-% |
| - Additiv zur Viskositätseinstellung | 2 - 4 Gew.-% |
| - Mineralische Partikel | 10 - 30 Gew.-% |
| - Lösungsmittel und/oder Dispergiermittel | 40 - 55 Gew.-% |

wobei sich die Anteile der Komponenten der Paste auf 100 Gew.-% ergänzen.

Bevorzugt sind die unmittelbar vorstehenden Merkmale a. und c. und d. in Kombination realisiert. In weiteren bevorzugten Ausführungsformen sind die Merkmale e. und f. in Kombination realisiert.

Besonders bevorzugtsind die unmittelbar vorstehenden Merkmale b. bis i. in Kombination realisiert.

Der Begriff "keramische Partikel" soll vorliegend sämtliche Partikel umfassen, die zur Herstellung keramischer Produkte dienen können, darunter silikatische Materialien wie Aluminiumsilikate, Tonmineralien, oxidische Materialien wie Siliziumoxid, Titandioxid und Aluminiumoxid sowie nicht-oxidische Materialien wie Siliziumcarbid oder Siliziumnitrid.

Der Begriff "nahezu odervollständig unlöslich" meint im Rahmen dervorliegenden Anmeldung, dass bei Raumtemperatur in einem entsprechenden Lösungsmittel eine allenfalls geringe, vorzugsweise gar keine, Löslichkeit besteht. Die Löslichkeit erfindungsgemäß einsetzbarer Partikel, insbesondere der erwähnten in Wasser nahezu oder vollständig unlöslichen Salze, sollte idealerweise die Löslichkeit des besonders bevorzugten Calciumcarbonats in Wasser bei Raumtemperatur nicht übersteigen.

Grundsätzlich wären für eine erfindungsgemäße Zelle auch alkalische Elektrolyten, beispielsweise Natronlauge oder Kalilauge, gut geeignet. Wässrige Elektrolyten mit einem pH-Wert im neutralen Bereich haben allerdings den Vorteil, im Falle einer mechanischen Beschädigung der Batterie weniger gefährlich zu sein. Allerdings haben auch übliche chloridbasierte Leitsalze Nachteile. Es wurde festgestellt, dass diese dazu in der Lage sind, Leiterstrukturen aus Silber anzugreifen. Daher sind ist es im Rahmen der vorliegenden Erfindung bevorzugt, dass chloridfreie Elektrolyte eingesetzt werden. Als chloridfreie Leitsalze sind insbesondere Zinksulfat, Zinkacetat und Ammoniumsulfat geeignet.

Überraschenderweise wurde festgestellt, dass der Einsatz von chloridfreien Leitsalzen wie insbesondere Zinksulfat, Zinkacetat und Ammoniumsulfat noch weitere Vorteile hat. Es wurde festgestellt, dass Elektroden mit SBR als Elektrodenbinder in Verbindung mit einem chloridbasierten Elektrolyten vergleichsweise schnell ihre Elastizität verlieren können. Dieser Effekt wurde mit chloridfreien Leitsalzen wie Zinksulfat, Zinkacetat und Ammoniumsulfat nicht beobachtet.

Es ist bevorzugt, dass sich der pH-Wert des wässrigen Elektrolyten im neutralen oder leicht sauren Bereich bewegt.

Besonders bevorzugt sind die mineralischen Partikel CaCO₃-Partikel mit einem d50-Wert im Bereich von 1,0 µm bis 5 µm, wobei die Paste zur Herstellung der mindestens eine Elektrolytschicht im Wesentlichen frei von mineralischen Partikeln mit einer Partikelgröße > 45 µm ist. Der Begriff "im Wesentlichen frei" soll im vorliegenden Zusammenhang im Übrigen bedeuten, dass weniger als 5 %, bevorzugte weniger als 1 %, der mineralischen Partikel einer Partikelgröße > 45 µm aufweisen.

Weiterhin ist es besonders bevorzugt, dass die mineralischen Partikel in der Paste zur Herstellung der mindestens eine Elektrolytschicht in einem Anteil von 10 - 20 Gew.-% enthalten sind.

Bei dem mineralischen Pulver mit einer mittleren Partikelgröße (d50) < 500 nm, bevorzugt < 200 nm, kandelt es sich bevorzugt um Siliziumdioxid, insbesondere um amorphes Siliziumdioxid. Besonders bevorzugt handelt es sich bei dem mineralischen Pulver um amorphes Siliziumdioxid oder um ein anderes mineralisches Pulver mit einer mittleren Partikelgröße (d50) < 100 nm, weiter bevorzugt < 50 nm.

Als Additiv zur Einstellung der Viskosität können auch bindende Substanzen wie Carboxymethylzellulose eingesetzt werden
Der Begriff Lösungs- und/oder Dispergiermittel bezieht sich im Übrigen darauf, dass die Pasten gemäß der beanspruchten Erfindung wasserlösliche und nicht wasserlösliche Bestandteile umfasst oder umfassen kann. Wasserlösliche Bestandteile liegen dann gelöst vor, nicht wasserlösliche dispergiert.

### Paste zur Herstellung der negativen Elektrode

Die zur Herstellung der negativen Elektrode verwendete Paste zeichnet sich in besonders bevorzugten Ausführungsformen durch mindestens eines der unmittelbar folgenden zusätzlichen Merkmale a. bis h. aus:
a. Die Paste zur Herstellung der negativen Elektrode umfasst das Zinkpulver in einem Anteil von mindestens 50 Gew.-% und bevorzugt von mindestens 60 Gew.-%.
b. Das Zinkpulver zeichnet sich durch einen d50-Wert im Bereich von 20 µm bis 40 µm aus und vorzugsweise durch einen Anteil an Partikeln > 45µm von weniger als 5 Gew.-%.
c. Die Paste zur Herstellung der negativen Elektrode umfasst mindestens ein Additiv, insbesondere zur Einstellung ihrer Viskosität, bevorzugt in einem Anteil im Bereich von 1 bis 8 Gew.-%.
d. Als Additiv zur Einstellung der Viskosität umfasst die Paste Carboxymethylzellulose.
e. Die Paste zur Herstellung der negativen Elektrode umfasst den Elektrodenbinder in einem Anteil von mindestens 1 Gew.-% und bevorzugt von höchstens 10 Gew.-%.
f. Die Paste zur Herstellung der negativen Elektrode umfasst als Elektrodenbinder einen Elektrodenbinder mit elastischen Eigenschaften, insbesondere einen Elektrodenbinder aus der Gruppe mit Polyacrylat (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.
g. Als Lösungs- und/oder Dispergiermittel wird Wasser verwendet.
h. Die Paste zur Herstellung der negativen Elektrode umfasstdiefolgenden Komponenten in den folgenden Anteilen

| | |
|---|---|
| - Zinkpulver (Quecksilberfrei): | 65 - 79 Gew.-% |
| - Additiv zur Viskositätseinstellung | 1 - 5 Gew.-% |
| - Binder, elastisch (z.B. SBR) | 5 - 10 Gew.-% |
| - Lösungsmittel und/oder Dispergiermittel | 15 - 20 Gew.-% |

wobei sich die Anteile der Komponenten der Paste auf 100 Gew.-% ergänzen.

Bevorzugt sind die unmittelbar vorstehenden Merkmale a. bis c. und e. bis g. in Kombination realisiert. In weiteren bevorzugten Ausführungsformen sind die Merkmale c. und d. in Kombination realisiert. Besonders bevorzugt sind die unmittelbar vorstehenden Merkmale a. bis h. in Kombination realisiert.

Besonders bevorzugt handelt es sich bei dem Elektrodenbinder in der negativen Elektrode um SBR.

Als Ersatz für die bevorzugt verwendete Carboxymethylzellulose könnte als Additiv zur Einstellung der Viskosität der Paste für die negative Elektrode auch das oben im Zusammenhang mit der Elektrolytpaste beschriebene mineralische Pulver mit der mittleren Partikelgröße (d50) < 500 nm, bevorzugt < 200 nm, zum Einsatz kommen, insbesondere das beschriebene amorphe Siliziumdioxid.

### Paste zur Herstellung der positiven Elektrode

Die zur Herstellung der positiven Elektrode verwendete Paste zeichnet sich in besonders bevorzugten Ausführungsformen durch mindestens eines der unmittelbar folgenden zusätzlichen Merkmale a. bisj. aus:
a. Die Paste zur Herstellung der positiven Elektrode umfasst das Mangandioxid in einem Anteil von mindestens 50 Gew.-% und bevorzugt von mindestens 60 Gew.-%.
b. Das Mangandioxid liegt partikelförmig vor und zeichnet sich durch einen d50-Wert im Bereich von 20 µm und 50 µm aus und vorzugsweise durch einen Anteil an Partikeln > 55µm von weniger als 5 Gew.-%.
c. Die Paste zur Herstellung der positiven Elektrode umfasst mindestens ein Additiv, insbesondere zur Einstellung ihrer Viskosität, bevorzugt in einem Anteil im Bereich von 1 bis 10 Gew.-%.
d. Als Additiv zur Einstellung der Viskosität umfasst die Paste Carboxymethylzellulose.
e. Die Paste zur Herstellung der positiven Elektrode umfasst den Elektrodenbinder in einem Anteil von mindestens 5 Gew.-% und bevorzugt von höchstens 15 Gew.-%.
f. Die Paste zur Herstellung der positiven Elektrode umfasst als Elektrodenbinder einen Elektrodenbinder mit elastischen Eigenschaften, insbesondere einen Elektrodenbinder aus der Gruppe mit Polyacrylat (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.
g. Die Paste zur Herstellung der positiven Elektrode umfasst das Leitmaterial in einem Anteil von 3 Gew.-% bis 10 Gew.-%.
h. Die Paste zur Herstellung der positiven Elektrode umfasst als Leitmaterial mindestens ein Leitmaterial aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs).
i. Als Lösungs- und/oder Dispergiermittel wird Wasser verwendet.
j. Die Paste zur Herstellung der positiven Elektrode umfasst die folgenden Komponenten in den folgenden Anteilen

| | |
|---|---|
| - Mangandioxid | 50 - 70 Gew.-% |
| - Leitmaterial (z.B. Grafit, Ruß) | 3 - 30 Gew.-% |
| - Additiv zur Viskositätseinstellung | 2 - 8 Gew.-% |
| - Binder, elastisch (z.B. SBR) | 8 - 15 Gew.-% |
| - Lösungsmittel und/oder Dispergiermittel | 20 - 30 Gew.-% |

wobei sich die Anteile der Komponenten der Paste auf 100 Gew.-% ergänzen.

Bevorzugt sind die unmittelbar vorstehenden Merkmale a. bis c. und e. bis g. in Kombination realisiert. In weiteren bevorzugten Ausführungsformen sind die Merkmale g. und h. in Kombination realisiert. Besonders bevorzugt sind die unmittelbar vorstehenden Merkmale a. bis j. in Kombination realisiert.

Der elastische Elektrodenbinder soll die in der positiven Elektrode enthaltenen Metalloxidpartikel relativ zueinander fixieren und den positiven Elektroden gleichzeitig eine gewisse Flexibilität verleihen soll. Der Anteil an dem elastischen Elektrodenbinder sollte den oben genannten Maximalanteil aber nicht überschreiten, da ansonsten die Gefahr besteht, dass die Metalloxidpartikel zumindest teilweise nicht mehr in Kontakt zueinander stehen. Um dies zu verhindern, ist auch das Leitmaterial zugesetzt.

Ein hoher Anteil des Metalloxids in der positiven Elektrode erhöht die Kapazität der Zelle. Für die Strombelastbarkeit ist der Anteil des Leitmaterials jedoch von größerer Bedeutung als der Gesamtanteil des Metalloxids.

Besonders bevorzugt handelt es sich bei dem Elektrodenbinder in der negativen Elektrode um SBR.

Das Leitmaterial ist in der Paste zur Herstellung der negativen Elektrode besonders bevorzugt in einem Anteil von 5 - 8 Gew.-% enthalten.

Als Ersatz für die bevorzugt verwendete Carboxymethylzellulose könnte als Additiv zur Einstellung der Viskosität auch im Fall der Paste für die positive Elektrode das oben im Zusammenhang mit der Elektrolytpaste beschriebene mineralische Pulver mit der mittleren Partikelgröße (d50) < 500 nm, bevorzugt < 200 nm, zum Einsatz kommen, insbesondere das beschriebene amorphe Siliziumdioxid.

### Verfahrensvarianten

In einer ersten besonders bevorzugten Ausführungsform zeichnet sich das erfindungsgemäße Verfahren durch die unmittelbar folgenden Schritte a. bis d. aus:
a. Auf wahlweise die negative Elektrode oder die positive Elektrode wird eine erste Schicht aus der Elektrolyt-Paste aufgebracht, insbesondere gedruckt, besonders bevorzugt mit einer Dicke von 30 bis 70 µm.
b. Auf die erste Schicht aus der Elektrolyt-Paste wird der Separator aufgebracht.
c. Auf den Separator wird eine zweite Schicht aus der Elektrolyt-Paste aufgebracht, insbesondere gedruckt, besonders bevorzugt mit einer Dicke von 30 bis 70 µm.
d. Der Schichtstapel wird gebildet, wobei die im Schritt a. nicht berücksichtigte Elektrode mit der zweiten Schicht aus der Elektrolyt-Paste kontaktiert wird.

In einer zweiten, besonders bevorzugten Ausführungsform zeichnet sich das Verfahren durch die folgenden Schritte a. bis c. aus:
a. Auf die negative Elektrode und die positive Elektrode wird jeweils eine Schicht aus der Elektrolyt-Paste aufgebracht, insbesondere gedruckt, besonders bevorzugt mit einer Dicke von 30 bis 70 µm.
b. Auf eine der Schichten aus der Elektrolyt-Paste wird der Separator aufgebracht, wobei eine Seite des Separators mit dieser Schicht aus der Elektrolyt-Paste in Kontakt tritt.
c. Der Schichtstapel wird gebildet, wobei die andere Seite des Separators mit der anderen der Schichten aus der Elektrolyt-Paste in Kontakt tritt.

Bei so hergestellten Schichtstapeln ist zwischen den Elektroden und den Separatoren immer eine der Schichten aus der Elektrolyt-Paste angeordnet. Oder mit anderen Worten: Die Separatoren so hergestellter Schichtstapel umfassen jeweils beidseitig eine Grenzschicht aus den mineralischen Partikeln.

In besonders bevorzugten Ausführungsformen ist das erfindungsgemäße Verfahren durch mindestens eines der unmittelbar folgenden zusätzlichen Merkmale a. bis f. gekennzeichnet:
a. Die Elektroden und die mindestens eine Elektrolytschicht werden durch ein Druckverfahren, insbesondere durch ein Siebdruckverfahren, gebildet.
b. Die negative Elektrode wird mit einer mittleren Dicke im Bereich von 30 µm bis 150 µm gebildet.
c. Die positive Elektrode wird mit einer mittleren Dicke im Bereich von 13 µm bis 350 µm gebildet.
d. Die mindestens eine Elektrolytschicht wird mit einer mittleren Dicke im Bereich von 10 bis 100 µm, vorzugsweise von 30 bis 70 µm, gebildet.
e. Die mindestens eine Elektrolytschicht wird auf die negative und/oder die positive Elektrode aufgebracht, solange diese noch mindestens feucht ist ("Nass-in-Nass-Auftrag").
f. Der Separator wird auf eine der gebildeten Elektrolytschichten aufgelegt, solange diese noch mindestens feucht ist.

Bevorzugt sind die unmittelbar vorstehenden Merkmale a. bis d. in Kombination realisiert. In weiteren bevorzugten Ausführungsformen sind die Merkmale e. und f. in Kombination realisiert. Besonders bevorzugt sind die unmittelbar vorstehenden Merkmale a. bis f. in Kombination realisiert.

Es ist also bevorzugt, dass die Pasten jeweils gedruckt werden. Damit es bei Drucken keine Probleme gibt, enthalten die Druckpasten in besonders bevorzugten Ausführungsformen alle partikulären Bestandteile mit Partikelgrößen von maximal 50 µm.

Wie oben bereits beschrieben, werden die elektrischen Leiter vor dem Aufbringen der Elektroden bevorzugt mit der elektrisch leitenden Schicht aus Kohlenstoff beschichtet, um die Leiter vor einem unmittelbaren Kontakt mit dem Elektrolyten schützen. Auch die Schicht aus Kohlenstoff kann aufgedruckt werden.

Die Elektrolyt-Paste wird bevorzugt in Kombination mit einer mikroporösen Polyolefinfolie (z.B. PE) mit einer Dicke im Bereich von 60 bis 120 µm und einer Porosität von 35 - 60% eingesetzt. Bevorzugt werden gemäß der obigen ersten oder zweiten besonders bevorzugten Ausführungsform Schichten aus der Elektrolyt-Paste auf den Elektroden und/oder dem Separator gebildet, insbesondere mit einer Dicke in den spezifizierten Bereichen, besonders bevorzugt jeweils mit einer Dicke von ca. 50 µm. Die Anode wird bevorzugt als Schicht mit einer Dicke von 30 µm bis 150 µm, insbesondere mit einer Dicke von 70 µm, gedruckt. Die positive Elektrode wird bevorzugt als Schicht mit einer Dicke von 180 bis 350 µm, insbesondere mit einer Dicke von 280 µm, gedruckt.

Wie bereits angesprochen, werden bei einem Verfahren gemäß der Erfindung Schichtstapel mit der Sequenz negative Elektrode / Separator / positive Elektrode gebildet. Dies kann bevorzugt dadurch erfolgen, dass die Elektroden einer Zelle nebeneinander, also in koplanarer Anordnung, auf das gleiche elektrisch nicht leitende Substrat gedruckt werden und das Substrat derart umgeschlagen beziehungsweise gefaltet wird, dass die Elektroden sowie der dazugehörige Separator überlagern. Das Substrat umschließt den entstandenen Schichtstapel nach dem Umschlagen von mindestens drei Seiten. Durch Verschweißung und/oder Verklebung der übrigen Seiten kann ein geschlossenes Gehäuse gebildet werden.

Das Substrat kann nahezu beliebig ausgestaltet sein. Ideal ist, wenn die Oberfläche keine elektrisch leitenden Eigenschaften aufweist, so dass Kurzschlüsse oder Kriechströme ausgeschlossen werden können, falls die Leiter der erfindungsgemäßen Zelle unmittelbar auf das Substrat gedruckt werden. Beispielsweise kann das Substrat ein Etikett auf Kunststoffbasis sein. Geeignet wäre beispielsweise eine Folie aus einem Polyolefin oder aus Polyethylenterephthalat, die auf einer Seite eine Klebefläche aufweist, mit der sie an einem Produkt fixiert werden kann. Auf die andere Seite können die

### Elektrische Leiter

Bei den elektrischen Leitern kann es sich beispielsweise um metallische Strukturen handeln, die mittels Abscheidung aus einer Lösung, mittels Abscheidung aus der Gasphase (beispielsweise durch ein PVD-Verfahren wie Sputtern) oder durch ein Druckverfahren gebildet werden. Es ist auch möglich, die Leiter aus einer geschlossenen Metallschicht durch einen Ätzprozess zu bilden, bei dem die Metallschicht in unmaskierten Bereichen entfernt wird.

In besonders bevorzugten Ausführungsformen zeichnet sich das Verfahren durch das folgende zusätzliche Merkmal a. aus:
a. Die elektrischen Leiter sind Leiterbahnen aus Metallpartikeln, insbesondere aus Silberpartikeln oder aus Partikeln aus einer Silberlegierung.

Solche Leiterbahnen lassen sich über ein Druckverfahren problemlos herstellen. Druckbare Leitpasten mit Silberpartikeln zur Herstellung der elektrischen Leitersind Stand der Technik und im Handel frei erhältlich.

In besonders bevorzugten Ausführungsformen zeichnet sich das erfindungsgemäße Verfahren durch die unmittelbar folgenden Merkmale aus:
a. Die elektrischen Leiter umfassen eine elektrisch leitende Metallschicht.
b. Die elektrischen Leiter umfassen zumindest bereichsweise eine elektrisch leitende Schicht aus Kohlenstoff, welche zwischen der Metallschicht und den Elektroden angeordnet wird und welche einen unmittelbaren Kontakt der Metallschicht mit einem flüssigen Elektrolyten erschwert oder sogar unterbindet.

Die elektrisch leitende Schicht aus Kohlenstoff dient dem Schutz der elektrischen Leiter. Insbesondere, wenn die Leiter Silberpartikel umfassen, besteht die Gefahr, dass sich Silber im Elektrolyten löst und es zu einer Schwächung oder gar Zerstörung von Leiterbahnen kommt. Die Carbonschicht kann die Leiter aus Silber vor einem unmittelbaren Kontakt mit dem Elektrolyten schützen.

Bevorzugt wird die elektrisch leitende Schicht aus Kohlenstoff mit einer Dicke im Bereich von 5 µm bis 30 µm, insbesondere im Bereich von 10 µm bis 20 µm, aufgebracht.

In einigen bevorzugten Ausführungsformen wird die Carbonschicht nach dem Aufbringen einer Wärmebehandlung unterzogen. Hierdurch kann ihre Dichtigkeit erhöht werden.

### Pastenset

Das erfindungsgemäße Set eignet sich insbesondere zur Verwendung in dem zuvor beschriebenen Verfahren zur Herstellung einer Zink-Braunstein-Zelle. Es umfasst stets die folgenden Komponenten:
a. Paste zur Herstellung einer negativen Elektrode umfassend die folgenden Komponenten:
   - Zinkpulver (Quecksilberfrei)
   - Elektrodenbinder
   - Lösungs- und/oder Dispergiermittel
      und
b. Paste zur Herstellung einer positiven Elektrode umfassend die folgenden Komponenten:
   - Mangandioxid
   - Leitmaterial zur Verbesserung der elektrischen Leitfähigkeit
   - Elektrodenbinder
   - Lösungs- und/oder Dispergiermittel
      und
c. Paste zur Herstellung einer Elektrolytschicht umfassend die folgenden Komponenten:
   - Das mindestens eine wasserlösliche, chloridfreie Leitsalz, insbesondere das mindestens eine Salz aus der Gruppe mit Zinksulfat, Zink-Acetat und Ammoniumsulfat.
   - Mineralische Partikel
   - Lösungs- und/oder Dispergiermittel

Bezüglich bevorzugter Eigenschaften der drei Pasten wird zur Vermeidung von Wiederholungen auf die vorstehenden Ausführungen im Zusammenhang mit dem erfindungsgemäßen Verfahren verwiesen.

Besonders bevorzugt umfasst das erfindungsgemäße Set als weitere Komponente einen Separator für die herzustellende Zink-Braunstein-Zelle. Bezüglich bevorzugter Eigenschaften des Separators wird gleichfalls auf die vorstehenden Ausführungen im Zusammenhang mit dem erfindungsgemäßen Verfahren verwiesen.

### Zink-Braunstein-Zelle und Zink-Braunstein-Batterie

In Übereinstimmung mit der der Erfindung zugrunde liegenden Aufgabe dient die erfindungsgemäße Zelle bevorzugt zur Versorgung von Pulsstromanwendungen mit einem elektrischen Strom von in der Spitze ≥ 400 mA. Sie kann daher unter anderen nach dem LTE-Standard arbeitende Mobilfunkchips mit elektrischer Energie versorgen. Grundsätzlich ist sie aber auch für andere Anwendungen geeignet.

Die erfindungsgemäße Zink-Braunstein-Zelle kann nach dem oben beschriebenen Verfahren hergestellt werden. Sie weist stets die unmittelbar folgenden Merkmale a. bis f. auf:
a. Sie umfasst einen ersten elektrischen Leiter auf einem elektrisch nicht leitenden Substrat und einen zweiten elektrischen Leiter auf einem elektrisch nicht leitenden Substrat;
b. sie umfasst eine schichtförmige negative Elektrode unmittelbar auf dem ersten elektrischen Leiter und eine schichtförmige positive Elektrode unmittelbar auf dem zweiten elektrischen Leiter;
c. sie umfasst einen schichtförmigen Separator;
   wobei
d. die Elektroden und der Separator als Schichtstapel mit der Sequenz negative Elektrode / Separator / positive Elektrode ausgebildet sind, in welchem die negative Elektrode und der Separator sowie die positive Elektrode und der Separator jeweils über eine Grenzfläche miteinander in Verbindung stehen;
   wobei
e. die Elektroden und der Separator mit einer Zinksalz-Lösung getränkt sind
   und wobei
f. die Grenzflächen zwischen den Elektroden und dem Separator durch mineralische Partikel gekennzeichnet sind, die dort eine für den Elektrolyten durchlässige Grenzschicht bilden.

Da die Grenzschicht durch ihren Anteil an mineralischen Füllpartikeln dazu beiträgt, die positive Elektrode und die negative Elektrode elektrisch voneinander zu isolieren, kann man sie auch als Bestandteil des Separators ansehen.

In besonders bevorzugten Ausführungsformen umfasst der schichtförmige Separator der erfindungsgemäßen Zink-Braunstein-Zelle zwei solcher Grenzschichten, nämlich eine auf jeder seiner Seiten.

Besonders bevorzugt zeichnet sich die Zink-Braunstein-Zelle durch mindestens eines der folgenden Merkmale a. und b. aus:
a. Die negative Elektrode der Zelle umfasst die folgenden Komponenten in den folgenden Anteilen

| | |
|---|---|
| - Zinkpulver (Quecksilberfrei): | 81 bis 93 Gew.-% |
| - Additiv zur Viskositätseinstellung | 1 bis 7 Gew.-% |
| - Elektrodenbinder | 6 bis 13 Gew.-% |

b. Die positive Elektrode der Zelle umfasst die folgenden Komponenten in den folgenden Anteilen

| | |
|---|---|
| - Mangandioxid | 62 - 82 Gew.-% |
| - Leitmaterial | 5 - 35 Gew.-% |
| - Additiv zur Viskositätseinstellung | 2- 10 Gew.-% |
| - Elektrodenbinder | 6 - 13 Gew.-% |

Die unmittelbar vorstehenden Merkmale a. und b. sind bevorzugt in Kombination realisiert.

Bezüglich bevorzugter Eigenschaften der angeführten Komponenten der Zelle, also beispielsweise der elektrischen Leiter oder der mineralischen Partikel, die die Grenzschicht bilden, wird zur Vermeidung von Wiederholungen auf die vorstehenden Ausführungen im Zusammenhang mit dem erfindungsgemäßen Verfahren verwiesen.

Es ist besonders bevorzugt, dass sich die erfindungsgemäße Zelle durch mindestens eines der unmittelbar folgenden zusätzlichen Merkmale a. bis c. auszeichnet:
a. Die Elektroden sind rechteckig oder in Form von Streifen ausgebildet.
b. Die Elektroden weisen
   - eine Länge im Bereich von 1 cm bis 25, bevorzugt von 5 cm bis 20 cm, und
   - eine Breite im Bereich von 0,5 bis 10 cm, bevorzugt von 1 cm bis 5 cm, auf.
c. Die elektrischen Leiter auf dem elektrisch nichtleitenden Substrat weisen eine Dicke im Bereich von 2 µm bis 250 µm, bevorzugt von 2 µm bis 100 µm, besonders bevorzugt von 2 µm bis 25 µm, weiter bevorzugt von 5 µm bis 10 µm, auf.

Bevorzugt sind die unmittelbar vorstehenden Merkmale a. bis c. in Kombination miteinander realisiert.

Die positive und die negative Elektrode der erfindungsgemäßen Zelle weisen jeweils besonders bevorzugt eine Dicke im Bereich von 10 µm bis zu 250 µm auf. Häufig wird die positive Elektrode etwas dicker ausgebildet als die negative Elektrode, da letztere in vielen Fällen eine höhere Energiedichte aufweist. So kann es in einigen Anwendungsfällen bevorzugt sein, die negative Elektrode als Schicht mit einer Dicke von 30 µm bis 150 µm und die positive Elektrode als Schicht mit einer Dicke von 180 bis 350 µm zu bilden. Durch die Einstellung der Dicken lassen sich die Kapazitäten von positiver und negativer Elektrode balancieren. Es ist diesbezüglich bevorzugt, dass die positive Elektrode gegenüber der negativen Elektrode überdimensioniert wird.

Die vorliegend beschriebene Erfindung umfasst auch Batterien, die zwei oder mehr der erfindungsgemäßen Zink-Braunstein-Zellen umfassen. Besonders bevorzugt umfassen die Batterien zwei, drei oder vier Reihe geschaltete erfindungsgemäße Zink-Braunstein-Zellen.

Eine erfindungsgemäße Zelle und eine erfindungsgemäße Batterie zeichnen sich bevorzugt durch mindestens eines der unmittelbar folgenden Merkmale a. und b. aus:
a. Sie umfasst ein Gehäuse, das die Elektroden der Zelle oder der Batterie umschließt, wobei ein erstes und ein zweites Substrat Bestandteil des Gehäuses sind.
b. Bei dem ersten und dem zweiten Substrat handelt es sich um Folien oder um Bestandteile einer Folie.

Auch hier sind die unmittelbar vorstehenden Merkmale a. und b. bevorzugt in Kombination miteinander realisiert.

Es ist bevorzugt, dass die erfindungsgemäße Batterie einschließlich des Gehäuses eine maximale Dicke im Bereich von wenigen Millimetern, besonders bevorzugt im Bereich von 0,5 mm bis 5 mm, weiter bevorzugt im Bereich von 1 mm bis 3 mm, aufweist. Ihre sonstigen Dimensionen hängen von der Anzahl der elektrisch verschalteten Einzelzellen und deren Dimensionen ab. Eine Batterie mit vier seriell verschalteten Einzelzellen kann beispielsweise eine Länge von 5 bis 20 cm und eine Breite von 4 bis 18 cm aufweisen.

Besonders bevorzugt kann die erfindungsgemäße Zelle oder die erfindungsgemäße Batterie auf einem Etikett auf Kunststoffbasis, insbesondere einem selbstklebenden Etikett aus Kunststoff, angeordnet oder gefertigt werden. Beispielsweise kann es sich bei dem ersten oder zweiten Substrat um eine Folie handeln, die auf einer ihrer Seiten eine Klebeschicht aufweist. Das Etikett kann auf beliebige Produkte und Verpackungen aufgeklebt werden. Gegebenenfalls können auf dem Etikett auch elektronische Anwendungen wie beispielsweise ein Mobilfunkchip angeordnet werden, die von der erfindungsgemäßen Zelle oder der erfindungsgemäßen Batterie mit elektrischer Energie versorgt werden. Insbesondere für diesen Anwendungszweck ist es erforderlich, dass die Elektroden eine hohe Flexibilität aufweisen, was durch den Anteil an dem elastischen Elektrodenbinder gewährleistet werden kann.

Wie oben ausgeführt ist, werden in einer bevorzugten Ausführungsform die Elektroden und die mindestens eine Elektrolytschicht der erfindungsgemäßen Zelle durch ein Druckverfahren, insbesondere durch ein Siebdruckverfahren, gebildet. In einigen besonders bevorzugten Ausführungsformen handelt es sich somit bei der erfindungsgemäßen Zelle um eine gedruckte Zelle.

Unter einer gedruckten Zelle soll hierbei eine Zelle verstanden werden, bei der zumindest die Elektroden und die Elektrolytschichten, gegebenenfalls auch die elektrischen Leiter, durch Drucken der beschriebenen Druckpasten auf ein Substrat, insbesondere mittels eines Siebdruckverfahrens, gebildet sind. Bevorzugt sind die Elektroden und die elektrischen Leiter gedruckt.

Weitere Merkmale der Erfindung sowie aus der Erfindung resultierende Vorteile ergeben sich aus den nachfolgenden Ausführungsbeispielen sowie den Zeichnungen, anhand derer die Erfindung erläutert wird. Die nachfolgend beschriebene Ausführungsform dient lediglich zur Erläuterung und zum besseren Verständnis der Erfindung und ist in keiner Weise einschränkend zu verstehen.

### ZEICHNUNGEN UND AUSFÜHRUNGSBEISPIELE

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.

In den Zeichnungen zeigen schematisch
Fig. 1 eine Illustration einer bevorzugten Ausführungsform eines erfindungsgemäßen Verfahrens zur Herstellung einer erfindungsgemäßen Batterie, die insgesamt vier erfindungsgemäße und elektrisch miteinander verschaltete Zellen umfasst, und
Fig. 2 einen Querschnitt durch die gemäß der in Fig. 1 dargestellten Vorgehensweise gebildete Batterie.

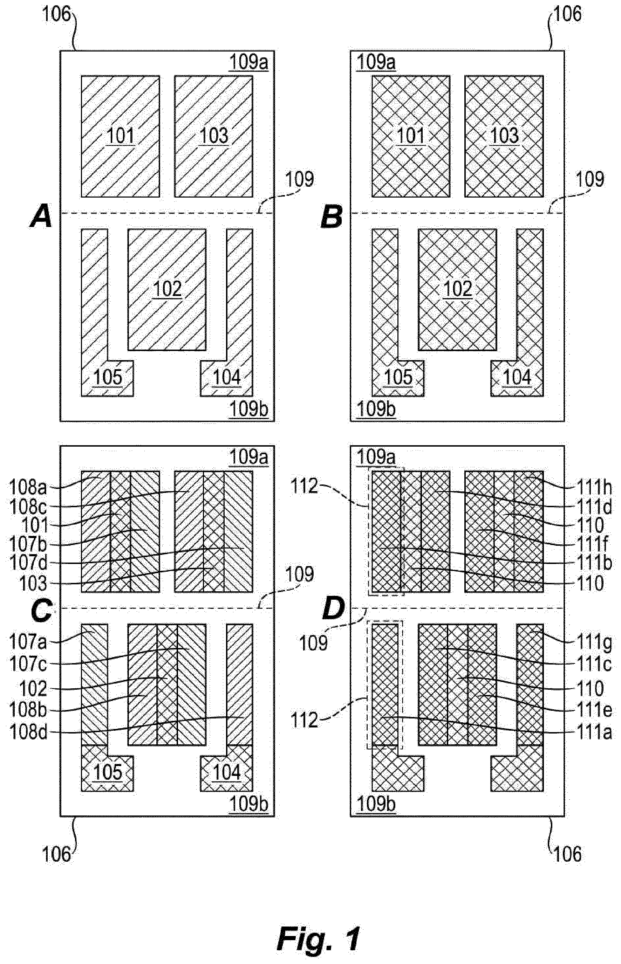

Anhand von **Fig. 1** lässt sich sowohl die Herstellung als auch die Struktur einer bevorzugten Ausführungsform einer erfindungsgemäßen Batterie 100 mit vier elektrisch in Reihe geschalteten Einzelzellen erläutern. Das Verfahren zur Herstellung umfasst die folgenden Schritte:
(1) Auf eine als Träger dienende PET-Folie 106 mit einer Dicke von 200 µm wird mittels Siebdruck eine Stromleiterstruktur gedruckt. Die PET-Folie 106 ist durch die Linie 109 in zwei Bereiche 109a und 109b unterteilt, von denen der Bereich 109a als erstes Substrat und der Bereich 109b als zweites Substrat dient. Die Stromleiterstruktur umfasst den ersten elektrischen Leiter 101, den zweiten elektrische Leiter 102, den dritten elektrische Leiter 103, den vierten elektrischen Leiter 104 und den fünften elektrischen Leiter 105. Der erste und der dritte Leiter 101 und 103 werden hierbei auf das erste Substrat 109a gedruckt. Die Leiter 102, 104 und 105 werden auf das zweite Substrat 109b gedruckt. Als Druckpaste dient hierbei eine handelsübliche Silberleitpaste. Im Bereich der elektrischen Leiter 101 - 105 ist die PET-Folie 106 jeweils vollflächig mit der Paste beschichtet, so dass die Leiter jeweils eine durchgehende elektrisch leitende Fläche bilden. Alle elektrischen Leiter werden bevorzugt als Schichten mit einer Dicke im Bereich von 10 µm µm bis 100 µm gebildet.
Das Ergebnis dieses Schritts ist in Fig. 1A dargestellt, wobei zu beachten ist, dass alle in der Zeichnung dargestellten Schichten parallel zur Zeichenebene angeordnet sind. Dies gilt analog für auf den Leitern abgeschiedene Carbon-, Elektroden- und Elektrolytschichten.
(2) In einem weiteren Schritt wird die Stromleiterstruktur mit einer dünnen Lage aus Kohlenstoffpartikeln abgedeckt. Die Lage aus den Kohlenstoffpartikeln wird bevorzugt mit einer Dicke von 12 µm gebildet. Als Druckpaste dient hierbei eine typische Carbon-Paste, wie sie zur Bildung elektrisch leitfähiger Schichten und Verbindungen in der Elektronik verwendet wird. Das Ergebnis dieses Schritts ist in Fig. 1B dargestellt.
Um die Abdeckung der Stromableiterstruktur durch die Lage aus den Kohlenstoffpartikeln zu optimieren, kann es bevorzugt sein, die gebildete Lage einer Wärmebehandlung zu unterziehen. Die dabei anwendbare Temperatur richtet sich primär nach derthermischen Stabilität der PET-Folie und muss entsprechend gewählt werden.
(3) Anschließend werden die negativen Elektroden 107a, 107b, 107c und 107d und die positiven Elektroden 108a, 108b, 108c und 108d auf die Stromleiterstruktur gedruckt. Hierzu wird der erste elektrische Leiter 101 unter Ausbildung der negativen Elektrode 107b bereichsweise mit einer Zinkpaste und unter Ausbildung der positiven Elektrode 108a bereichsweise mit einer Manganoxidpaste überdruckt. Derzweite elektrische Leiter 102 wird unter Ausbildung der negativen Elektrode 107c bereichsweise mit der Zinkpaste und unter Ausbildung der positiven Elektrode 108b bereichsweise mit der Manganoxidpaste überdruckt. Der dritte elektrische Leiter 103 wird unter Ausbildung der negativen Elektrode 107d bereichsweise mit der Zinkpaste und unter Ausbildung der positiven Elektrode 108c bereichsweise mit der Manganoxidpaste überdruckt. Der vierte elektrische Leiter 104 wird unter Ausbildung der positiven Elektrode 108d bereichsweise mit der Manganoxidpaste überdruckt. Und der fünfte elektrische Leiter 105 wird unter Ausbildung der negativen Elektrode 107a bereichsweise mit der Zinkpaste überdruckt Die Pasten weisen die folgenden Zusammensetzungen auf:
Zinkpaste:

| | |
|---|---|
| - Zinkpartikel | 70 Gew.-% |
| - CMC | 2 Gew.-% |
| - SBR | 6 Gew.-% |
| - Lösungs- und/oder Dispergiermittel (Wasser) | 22 Gew.-% |

Manganoxidpaste:

| | |
|---|---|
| - Manganoxid | 60 Gew.-% |
| - Graphit | 6 Gew.-% |
| - Zinksulfat | 2 Gew.-% |
| - CMC | 2 Gew.-% |
| - SBR | 5 Gew.-% |
| - Lösungs- und/oder Dispergiermittel (Wasser) | 25 Gew.-% |

Das Ergebnis dieses Schritts ist in Fig. 1C dargestellt.
Die negativen Elektroden 107a - 107d und die positiven Elektroden 108a -108d werden jeweils in Form von rechteckigen Streifen mit einer Länge von 11 cm und einer Breite von 2 cm ausgebildet. Die negativen Elektroden 107a - 107d werden hierbei bevorzugt als Schichten mit einer Dicke von 70 µm gebildet. Die positiven Elektroden 108a -108d werden bevorzugt als Schichten mit einer Dicke von 280 µm gebildet. Für die Bildung der positiven Elektroden 108a -108d wird gegebenenfalls mehr als ein Druckvorgang benötigt.
Über den ersten Leiter 101, den zweiten Leiter 102 und den dritten Leiter 103 sind jeweils zwei der Elektroden elektrisch miteinander verbunden. Der Leiter 101 verbindet die positive Elektrode 108a mit der negativen Elektrode 107b, der Leiter 102 verbindet die positive Elektrode 108b mit der negativen Elektrode 107c und der Leiter 103 verbindet die positive Elektrode 108c mit der negativen Elektrode 107d. Diese elektrischen Verbindungen sind die Basis für die gewünschte serielle Verschaltung der vier Einzelzellen.
Die Leiter 101, 102 und 103, die jeweils zwei Elektroden elektrisch miteinander verbinden, bilden auf der Oberfläche des jeweiligen Substrats 109a und 109b jeweils eine elektrisch leitende Fläche, die größer als die Fläche ist, welche die elektrisch miteinander verbundenen Elektroden 108a und 107b, 108b und 107c sowie 108c und 107d auf der Oberfläche einnehmen. Zum einen umfassen die elektrisch leitenden Flächen jeweils einen Bereich, der von den Elektroden abgedeckt ist. Zum anderen ist zwischen den elektrisch verbundenen Elektroden jeweils ein Spalt 110 ausgebildet, der die Elektroden voneinander trennt. Die elektrisch leitenden Flächen erstrecken sich auch über diesen Spalt 110, mit dem Ergebnis, dass der Querschnitt des Leiters in dem Spalt zwischen den Elektroden nicht abfällt.
All dies wirkt sich bereits positiv auf die Impedanzwerte dererfindungsgemäßen Batterie 100 aus. Die großflächige Kontaktierung der Elektroden und insbesondere auch die Verbindung über den Spalt 110 gewährleistet eine optimale elektrische Anbindung der Elektroden und minimiert elektrische Widerstände.
Auch der vierte und der fünfte Leiter 104 und 105, die nur mit den Elektroden 107a und 108d in elektrischem Kontakt stehen, bilden auf der Oberfläche des jeweiligen Substrats eine elektrisch leitende Fläche, die größer ist als die Fläche, welche die jeweils elektrisch kontaktierte Elektrode auf der Oberfläche einnimmt. Zum einen umfassen die elektrisch leitenden Flächen jeweils einen Bereich, der von den Elektroden abgedeckt ist. Zum anderen ist umfassen die elektrisch leitenden Flächen jeweils einen nicht von Elektrodenmaterial bedeckten Bereich. Diese Bereiche können als Pole der Batterie 100 dienen, um die addierte Spannung ihrer vier seriell verschalteten Einzelzellen abgreifen zu können.
(5) In einem weiteren Folgeschritt werden die negativen Elektroden 107a - 107d und die positiven Elektroden 108a -108d mit einer Zinksulfat-Paste bedruckt. Es werden dabei die Elektrolytpastenschichten 111a - 111h gebildet, die jeweils beispielsweise eine Dicke von ca. 50 µm aufweisen.
Das Ergebnis dieses Schritts ist in Fig. 1D dargestellt. Bevorzugt kommt in diesem Schritt eine Elektrolyt-Paste mit folgender Zusammensetzung zum Einsatz:

| | |
|---|---|
| - Zinksulfat | 35 Gew.-% |
| - Stellmittel (Siliziumdioxid) | 3 Gew.-% |
| - Mineralische, wasserunlösliche Partikel (CaCO₃) | 15 Gew.-% |
| - Lösungs- und/oder Dispergiermittel (Wasser) | 47 Gew.-% |

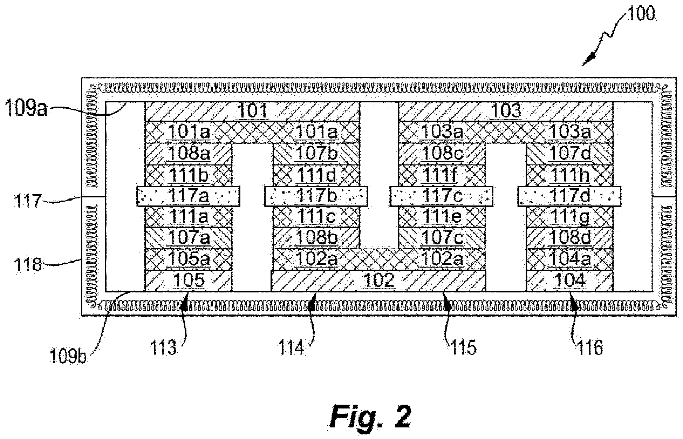

Das Stellmittel und die wasserunlöslichen Partikel wirken elektrisch isolierend.
Besonders vorteilhaft ist es, wenn vor dem Aufdrucken der Paste um die einzelnen Elektroden beispielsweise mittels einer Klebstoffmasse ein Siegelrahmen 112 gebildet wird, der die Elektroden umschließt. Als Ausgangsmaterial für die Bildung des Siegelrahmens 112 kann beispielsweise ein handelsüblicher Lötstopplack dienen. Exemplarisch sind zwei Siegelrahmen 112 dargestellt, die die Elektroden 107a und 108a umschließen. Bei entsprechender Verfahrensführung sind zweckmäßigerweise alle Elektroden mit Siegelrähmen zu umschließen.
(6) Anschließend werden die Elektrolytpastenschichten 111a - 111h mit mehreren Separatoren abgedeckt, wobei dies bevorzugt unverzüglich nach dem Drucken der Elektrolytpastenschichten erfolgt, so dass die Elektrolytpastenschichten nicht austrocknen. Dann wird die PET-Folie 106 entlang der Linie 109 gefaltet und umgeschlagen, so dass
- die negative Elektrode 107a mit einem der Separatoren und mit der positiven Elektrode 108a einen ersten Schichtstapel bildet,
- die negative Elektrode 107b mit einem der Separatoren und mit der positiven Elektrode 108b einen zweiten Schichtstapel bildet,
- die negative Elektrode 107c mit einem der Separatoren und mit der positiven Elektrode 108c einen dritten Schichtstapel bildet, und
- die negative Elektrode 107d mit einem der Separatoren und mit der positiven Elektrode 108d einen vierten Schichtstapel bildet.
Durch das Umschlagen und eine abschließende Verschweißung und / oder Verklebung kann ein geschlossenes Gehäuse gebildet werden, in dem die Schichtstapel angeordnet sind.
Das Ergebnis dieses Schritts ist in Figur 2 dargestellt.
Als Separatoren werden hierbei mikroporöse Polyolefinfolien eingesetzt, deren Dicke im Bereich von 60 - 120 µm liegt und die eine Porosität (Verhältnis von Hohlraumvolumen zu Gesamtvolumen) von 35 - 60 % aufweist.

Die in **Fig. 2** im Querschnitt dargestellte Batterie 100 umfasst vier als Schichtstapel ausgebildete Einzelzellen 113, 114, 115 und 116. Die dargestellte Batterie lässt sich gemäß dem in Fig. 1 illustrierten Vorgehen fertigen, wobei zur Bildung der Einzelzellen insgesamt vier als Schicht ausgebildete Separatoren 117a - 117d eingesetzt werden.

Neben den Separatoren 117a - 117d umfassen die Schichtstapel 113 - 116 jeweils eine der negativen Elektroden 107a - 107d und eine der positiven Elektroden 108a -108d. Im Detail:
Der Schichtstapel 113 umfasst die elektrischen Leiter 101 und 105. Diese umfassen die Lagen 101a und 105a aus Kohlenstoffpartikeln, die sie vor einem Kontakt mit dem Elektrolyten schützen. Die positive Elektrode 108a ist unmittelbar auf der Lage 101a abgeschieden, die negative Elektrode 107a unmittelbar auf der Lage 105a. Zwischen den Elektroden 107a und 108a ist der Separator 117a angeordnet, der von den Elektrolytpastenschichten 111a und 111b eingerahmt ist. Da die Elektrolytschichten 111a und 111b durch ihren Anteil an elektrisch nicht leitenden, mineralischen Partikeln dazu beitragen, die positive Elektrode 108a und die negative Elektrode 107a elektrisch voneinander zu isolieren, kann man sie als Bestandteile des Separators 117a ansehen. Die mineralischen Partikel bilden jedenfalls eine Grenzschicht zwischen den Elektroden und den Separatoren, die jedoch durchlässig für das in Wasser gelöste Zimksulfat ist.

Der Schichtstapel 114 umfasst die elektrischen Leiter 101 und 102. Diese umfassen die Lagen 101a und 102a aus Kohlenstoffpartikeln, die sie vor einem Kontakt mit dem Elektrolyten schützen. Die positive Elektrode 108b istunmittelbar auf der Lage 102a abgeschieden, die negative Elektrode 107b unmittelbar auf der Lage 101a. Zwischen den Elektroden 107b und 108b ist der Separator 117b angeordnet, der von den Elektrolytschichten 111c und 111d eingerahmt ist. Da die Elektrolytschichten 111c und 111d durch ihren Anteil an elektrisch nicht leitenden, mineralischen Komponenten dazu beitragen, die positive Elektrode 108b und die negative Elektrode 107b elektrisch voneinander zu isolieren, kann man sie als Bestandteile des Separators 117b ansehen. Die mineralischen Partikel bilden jedenfalls eine Grenzschicht zwischen den Elektroden und den Separatoren, die jedoch durchlässig für das in Wasser gelöste Zinksulfat ist.

Der Schichtstapel 115 umfasst die elektrischen Leiter 102 und 103. Diese umfassen die Lagen 102a und 103a aus Kohlenstoffpartikeln, die sie vor einem Kontakt mit dem Elektrolyten schützen. Die positive Elektrode 108c ist unmittelbar auf der Lage 103a abgeschieden, die negative Elektrode 107c unmittelbar auf der Lage 102a. Zwischen den Elektroden 107c und 108c ist der Separator 117c angeordnet, der von den Elektrolytschichten 111e und 111f eingerahmt ist. Da die Elektrolytschichten 111e und 111f durch ihren Anteil an elektrisch nicht leitenden, mineralischen Komponenten dazu beitragen, die positive Elektrode 108c und die negative Elektrode 107c elektrisch voneinander zu isolieren, kann man sie als Bestandteile des Separators 117c ansehen. Die mineralischen Partikel bilden jedenfalls eine Grenzschicht zwischen den Elektroden und den Separatoren, die jedoch durchlässig für das in Wasser gelöste Zinksulfat ist.

Der Schichtstapel 116 umfasst die elektrischen Leiter 103 und 104. Diese umfassen die Lagen 103a und 104a aus Kohlenstoffpartikeln, die sie vor einem Kontakt mit dem Elektrolyten schützen. Die positive Elektrode 108d ist unmittelbar auf der Lage 104a abgeschieden, die negative Elektrode 107d unmittelbar auf der Lage 103a. Zwischen den Elektroden 107d und 108d ist der Separator 117d angeordnet, der von den Elektrolytschichten 111g und 111h eingerahmt ist. Da die Elektrolytschichten 111g und 111h durch ihren Anteil an elektrisch nicht leitenden, mineralischen Komponenten dazu beitragen, die positive Elektrode 108d und die negative Elektrode 107d elektrisch voneinander zu isolieren, kann man sie als Bestandteile des Separators 117d ansehen. Die mineralischen Partikel bilden jedenfalls eine Grenzschicht zwischen den Elektroden und den Separatoren, die jedoch durchlässig für das in Wasser gelöste Zinksulfat ist.

Der erste Leiter 101 und der dritte Leiter 103 sind beanstandet voneinander auf einer dem zweiten Substrat 109b zugewandten Oberfläche des ersten Substrats 109a angeordnet sind, während der zweite Leiter 102, der vierte Leiter 104 und der fünfte Leiter 105 beanstandet voneinander auf einer dem ersten Substrat 109a zugewandten Oberfläche des zweiten Substrats 109b angeordnet ist,

Die vier Einzelzellen 113, 114, 115 und 116 sind elektrisch in Reihe geschaltet, so dass sich ihre Spannungen addieren. Zu diesem Zweck sind entgegengesetzt gepolte Elektroden der Einzelzellen über den ersten Leiter 101, den zweiten Leiter 102 und den dritten Leiter 103 elektrisch miteinander verbundenen. Die Leiter Elektroden eine entgegengesetzte Polarität aufweisen, und der erste Leiter steht elektrisch mit einer Elektrode der vierten Einzelzelle in Kontakt, wobei die durch diesen Leiter elektrisch verbundenen Elektroden gleichfalls eine entgegengesetzte Polarität aufweisen. Wie oben bereits ausgeführt, können nicht von Elektrodenmaterial bedeckte Bereiche der Leiter 104 und 105 als Pole der Batterie 100 dienen, um die addierte Spannung ihrer vier seriell verschalteten Einzelzellen 113 - 116 abgreifen zu können.

Da die hier beschriebenen Einzelzellen 113 - 116 auf Zink-Braunstein als elektrochemischem System basieren, liefert jede der Zellen eine Nennspannung von ca. 1,5 Volt. Die Batterie 100 vermag daher eine Nennspannung von ca. 6 Volt bereitzustellen.

In Folge des erwähnten Umschlagens und der abschließenden Verschweißung und / oder Verklebung entlang der Linie 117 weist die erfindungsgemäße Batterie 110 ein geschlossenes Gehäuse 118 auf, in dem die Schichtstapel 113 bis 116 angeordnet sind. Die nicht von Elektrodenmaterial bedeckten Bereiche der Leiter 104 und 105 können aus dem Gehäuse herausgeführt werden, damit die Spannung der Batterie 100 von außen abgreifbar ist.

Für die Impedanzeigenschaften der erfindungsgemäßen Batterie 100 ist es wichtig, dass die innerhalb der Schichtstapel in unmittelbarem Kontakt stehenden schichtförmigen Komponenten der Einzelzellen 113 - 116 einen möglichst großflächigen Kontakt zueinander aufweisen. Dies wird anhand der Einzelzelle 113 erläutert.

Zunächst ist es zur Optimierung der Impedanz erforderlich, einen möglichst großflächigen Kontakt zwischen den Elektroden 107a und 108a und den elektrischen Leitern 101 und 105 bereitzustellen. Wie oben ausgeführt, bilden die Leiter 101 und 105 auf den Substraten 109a und 109b jeweils durchgehende, elektrisch leitende Flächen aus, wie es in Fig. 1A und 1B dargestellt ist. Die von dem Leiter 101 gebildete elektrisch leitende Fläche und die darauf abgeschiedene Elektrode 108a etwa überlagern in Blickrichtung senkrecht zu der Elektrode 108a und dem Leiter 101 in einem Überlagerungsbereich, in welchem eine Gerade senkrecht zu der Elektrode 108a sowohl die Elektrode als auch den Leiter 101 schneidet. Im konkreten Fall beträgt diese Überlagerungsbereich exakt der Fläche der Elektrode 108a. Die Elektrode 108a steht somit vollflächig mit dem elektrischen Leiter 101 in Kontakt. Im Fall des Kontaktes zwischen der Elektrode 107a mit dem Leiter 105 gilt das analog. Auch hier liegt eine vollflächige Kontaktierung vor.

Des Weiteren von Bedeutung ist die Anbindung der Elektroden 107a und 108a an den Separator 117a. Der Separator 117a steht, wie oben erläutert, über die Elektrolytschichten 111a und 111b bzw. die aus den mineralischen Partikeln gebildeten Grenzschichten mit den Elektroden 107a und 108a in Kontakt, wobei im vorliegenden Beispiel die Elektrolyt- bzw. Grenzschichten 111a und 111b als Teil des Separators 117a angesehen werden können. Eine Seite des Separators weist eine erste Kontaktfläche zur positiven Elektrode 108a auf, die andere Seite parallel dazu eine zweite Kontaktfläche zur negativen Elektrode 107a. Bevorzugt überlagern die Kontaktflächen einander in Blickrichtung senkrechtzu dem Separator in einem Überlagerungsbereich, welcher dadurch definiert ist, dass eine Gerade senkrecht zu dem Separator beide Kontaktflächen schneidet.

Da die Elektroden 107a und 108a vorliegend identischer Flächendimensionen aufweisen und innerhalb des Stapels nicht versetzt zueinander angeordnet sind, entspricht die Größe dieses Überlagerungsbereichs exakt der Größe der Elektroden 107a und 108a. Die Elektroden 107a und 108a stehen somit nicht nur mit den Leitern 101 und 105 vollflächig in Kontakt, sondern auch mit dem Separator bzw. den Elektrolytschichten 111a und 111b des Separators.

## Patentansprüche

1. Verfahren zur Herstellung einer Zink-Braunstein-Zelle mit den Schritten
a. Aufbringen eines ersten elektrischen Leiters auf ein elektrisch nicht leitendes Substrat und eines zweiten elektrischen Leiters auf ein elektrisch nicht leitendes Substrat;
b. Aufbringen einer schichtförmigen negativen Elektrode unmittelbar auf den ersten elektrischen Leiter und einer schichtförmigen positiven Elektrode unmittelbar auf den zweiten elektrischen Leiter;
c. Bereitstellen eines schichtförmigen Separators;
d. Aufbringen mindestens einer Elektrolytschicht auf die schichtförmige negative Elektrode und/oder auf die schichtförmige positive Elektrode und/oder auf den schichtförmigen Separator;
e. Bilden eines Schichtstapels mit der Sequenz negative Elektrode / Separator / positive Elektrode;
wobei
f. die negative Elektrode aus einer Paste umfassend die folgenden Komponenten
- Zinkpulver (Quecksilberfrei)
- Elektrodenbinder
- Lösungs- und/oder Dispergiermittel
und
g. die positive Elektrode aus einer Paste umfassend die folgenden Komponenten
- Mangandioxid
- Leitmaterial zur Verbesserung der elektrischen Leitfähigkeit
- Elektrodenbinder
- Lösungs- und/oder Dispergiermittel
und
h. die mindestens eine Elektrolytschicht aus einer Paste umfassend die folgenden Komponenten
- Mindestens ein wasserlösliches, chloridfreies Leitsalz
- Mineralische Partikel
- Lösungs- und/oder Dispergiermittel
gebildet wird, und wobei der Anteil an den mineralischen Partikeln in der Paste mindestens 5 Gew.-% und höchstens 60 Gew.-% beträgt.

2. Verfahren nach Anspruch 1 mit mindestens einem der folgenden zusätzlichen Merkmale:
a. Bei dem verwendeten Separator handelt es sich um eine poröse Kunststofffolie oder um ein poröses Vlies;
b. Der verwendete Separator weist eine Dicke im Bereich von 60 bis 120 µm auf.
c. Der verwendete Separator weist eine Porosität (Verhältnis von Hohlraumvolumen zu Gesamtvolumen) im Bereich von 35 - 60 % auf.
d. Der verwendete Separator besteht aus einem Polyolefin, beispielsweise aus Polyethylen.

3. Verfahren nach einem der Ansprüche 1 oder 2 mit mindestens einem der folgenden zusätzlichen Merkmale:
a. Die mineralischen Partikel sind ausgewählt aus der Gruppe mit keramischen Partikeln, in Wasser nahezu oder vollständig unlöslichen Salzpartikeln, Glaspartikeln und Partikeln aus natürlichen Mineralien und Gesteinen wie Basalt.
b. Als mineralische Partikel werden CaCO₃-Partikel verwendet.
c. Die mineralischen Partikel weisen einen d50-Wert im Bereich von 0,8 µm bis 40 µm, bevorzugt im Bereich von 0,8 µm bis 15 µm, besonders bevorzugt im Bereich von 1,0 µm bis 5 µm, auf.
d. Die Paste zur Herstellung der mindestens eine Elektrolytschicht ist im Wesentlichen frei von mineralischen Partikeln mit einer Partikelgröße > 80 µm, bevorzugt > 60 µm, besonders bevorzugt > 45 µm.
e. Die Paste zur Herstellung der mindestens eine Elektrolytschicht umfasst mindestens ein Additiv, insbesondere zur Einstellung ihrer Viskosität, bevorzugt in einem Anteil im Bereich von 1 bis 8 Gew.-%.
f. Als Additiv zur Einstellung der Viskosität umfasst die Paste ein mineralisches Pulver mit einer mittleren Partikelgröße (d50) < 500 nm, bevorzugt < 200 nm.
g. Als Lösungs- und/oder Dispergiermittel wird Wasser verwendet.
h. Der Anteil an dem mindestens einen Zinksalz in der Paste beträgt mindestens 25 Gew.-% und höchstens 50 Gew.-%.
i. Die Paste zur Herstellung der mindestens eine Elektrolytschicht umfasst die folgenden Komponenten in den folgenden Anteilen
| | |
|---|---|
| - Das mindestens eine wasserlösliche, chloridfreie Leitsalz, insbesondere das mindestens eine Salz aus der Gruppe mit Zinksulfat, Zink-Acetat und Ammoniumsulfat | 30 - 40 Gew.-% |
| - Additiv zur Viskositätseinstellung | 2 - 4 Gew.-% |
| - Mineralische Partikel | 10 - 30 Gew.-% |
| - Lösungs- und/oder Dispergiermittel | 40 - 55 Gew.-% |
wobei sich die Anteile der Komponenten der Paste auf 100 Gew.-% ergänzen.

4. Verfahren nach einem der vorhergehenden Ansprüche mit mindestens einem der folgenden zusätzlichen Merkmale:
a. Die Paste zur Herstellung der negativen Elektrode umfasst das Zinkpulver in einem Anteil von mindestens 50 Gew.-% und bevorzugt von mindestens 60 Gew.-%.
b. Das Zinkpulver zeichnet sich durch einen d₅₀-Wert im Bereich von 20 µm bis 40 µm aus und vorzugsweise durch einen Anteil an Partikeln > 45 µm von weniger als 5 Gew.-%.
c. Die Paste zur Herstellung der negativen Elektrode umfasst mindestens ein Additiv, insbesondere zur Einstellung ihrer Viskosität, bevorzugt in einem Anteil im Bereich von 1 bis 8 Gew.-%.
d. Als Additiv zur Einstellung der Viskosität umfasst die Paste Carboxymethylzellulose.
e. Die Paste zur Herstellung der negativen Elektrode umfasst den Elektrodenbinder in einem Anteil von mindestens 1 Gew.-% und bevorzugt von höchstens 10 Gew.-%.
f. Die Paste zur Herstellung der negativen Elektrode umfasst als Elektrodenbinder einen Elektrodenbinder mit elastischen Eigenschaften, insbesondere einen Elektrodenbinder aus der Gruppe mit Polyacrylat (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.
g. Als Lösungs- und/oder Dispergiermittel wird Wasser verwendet.
h. Die Paste zur Herstellung der negativen Elektrode umfasst die folgenden Komponenten in den folgenden Anteilen
| | |
|---|---|
| - Zinkpulver (Quecksilberfrei): | 65 - 79 Gew.-% |
| - Additiv zur Viskositätseinstellung | 1 - 5 Gew.-% |
| - Binder, elastisch (z.B. SBR) | 5 - 10 Gew.-% |
| - Lösungs- und/oder Dispergiermittel | 15 - 20 Gew.-% |
wobei sich die Anteile der Komponenten der Paste auf 100 Gew.-% ergänzen.

5. Verfahren nach einem der vorhergehenden Ansprüche mit mindestens einem der folgenden zusätzlichen Merkmale:
a. Die Paste zur Herstellung der positiven Elektrode umfasst das Mangandioxid in einem Anteil von mindestens 50 Gew.-% und bevorzugt von mindestens 60 Gew.-%.
b. Das Mangandioxid liegt partikelförmig vor und zeichnet sich durch einen d₅₀-Wert im Bereich von 20 µm und 50 µm aus und vorzugsweise durch einen Anteil an Partikeln > 55 µm von weniger als 5 Gew.-%.
c. Die Paste zur Herstellung der positiven Elektrode umfasst mindestens ein Additiv, insbesondere zur Einstellung ihrer Viskosität, bevorzugt in einem Anteil im Bereich von 1 bis 10 Gew.-%.
d. Als Additiv zur Einstellung der Viskosität umfasst die Paste Carboxymethylzellulose.
e. Die Paste zur Herstellung der positiven Elektrode umfasst den Elektrodenbinder in einem Anteil von mindestens 5 Gew.-% und bevorzugt von höchstens 15 Gew.-%.
f. Die Paste zur Herstellung der positiven Elektrode umfasst als Elektrodenbinder einen Elektrodenbinder mit elastischen Eigenschaften, insbesondere einen Elektrodenbinder aus der Gruppe mit Polyacrylat (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.
g. Die Paste zur Herstellung der positiven Elektrode umfasst das Leitmaterial in einem Anteil von 5 Gew.-% bis 35 Gew.-%.
h. Die Paste zur Herstellung der positiven Elektrode umfasst als Leitmaterial mindestens ein Leitmaterial aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs).
i. Als Lösungs- und/oder Dispergiermittel wird Wasser verwendet.
j. Die Paste zur Herstellung der positiven Elektrode umfasst die folgenden Komponenten in den folgenden Anteilen
| | |
|---|---|
| - Mangandioxid | 50 - 70 Gew.-% |
| - Leitmaterial (z.B. Grafit, Ruß) | 3 - 30 Gew.-% |
| - Additiv zur Viskositätseinstellung | 2 - 8 Gew.-% |
| - Elektrodenbinder, elastisch (z.B. SBR) | 8 - 15 Gew.-% |
| - Lösungs- und/oder Dispergiermittel | 20 - 30 Gew.-% |
wobei sich die Anteile der Komponenten der Paste auf 100 Gew.-% ergänzen.

6. Verfahren nach einem der vorhergehenden Ansprüche mit mindestens einem der folgenden zusätzlichen Merkmale:
a. Die Elektroden und die mindestens eine Elektrolytschicht werden durch ein Druckverfahren, insbesondere durch ein Siebdruckverfahren, gebildet.
b. Die negative Elektrode wird mit einer mittleren Dicke im Bereich von 30 µm bis 150 µm gebildet.
c. Die positive Elektrode wird mit einer mittleren Dicke im Bereich von 13 µm bis 350 µm gebildet.
d. Die mindestens eine Elektrolytschicht wird mit einer mittleren Dicke im Bereich von 10 bis 100 µm, vorzugsweise von 30 bis 70 µm, gebildet.
e. Die mindestens eine Elektrolytschicht wird auf die negative und/oder die positive Elektrode aufgebracht, solange diese noch mindestens feucht ist ("Nass-in-Nass-Auftrag").
f. Der Separator wird auf eine der gebildeten Elektrolytschichten aufgelegt, solange diese noch mindestens feucht ist.

7. Set zur Herstellung einer Zink-Braunstein-Zelle mit den folgenden Komponenten:
a. Paste zur Herstellung einer negativen Elektrode umfassend die folgenden Komponenten:
- Zinkpulver (Quecksilberfrei)
- Elektrodenbinder
- Lösungs- und/oder Dispergiermittel
und
b. Paste zur Herstellung einer positiven Elektrode umfassend die folgenden Komponenten:
- Mangandioxid
- Leitmaterial zur Verbesserung der elektrischen Leitfähigkeit
- Elektrodenbinder
- Lösungs- und/oder Dispergiermittel
und
c. Paste zur Herstellung einer Elektrolytschicht umfassend die folgenden Komponenten:
- Das mindestens einen wasserlöslichen, chloridfreien Leitsalz, insbesondere das mindestens eine Salz aus der Gruppe mit Zinksulfat, Zink-Acetat und Ammoniumsulfat.
- Mineralische Partikel
- Lösungs- und/oder Dispergiermittel

8. Set nach Anspruch 7 mit einem Separator für eine Zink-Braunstein-Zelle als weiterer Komponente, wobei der Separator die folgenden Eigenschaften aufweist:
a. Bei dem verwendeten Separator handelt es sich um eine poröse Kunststofffolie oder um ein poröses Vlies;
b. Der verwendete Separator weist eine Dicke im Bereich von 60 bis 120 µm auf.
c. Der verwendete Separator weist eine Porosität (Verhältnis von Hohlraumvolumen zu Gesamtvolumen) im Bereich von 35 - 60 % auf.
d. Der verwendete Separator besteht aus einem Polyolefin, beispielsweise aus Polyethylen.

9. Zink-Braunstein-Zelle, herstellbar nach einem Verfahren gemäß einem der Ansprüche 1 bis 6, mit den folgenden Merkmalen:
a. Sie umfasst einen ersten elektrischen Leiter auf einem elektrisch nicht leitenden Substrat und einen zweiten elektrischen Leiter auf einem elektrisch nicht leitenden Substrat;
b. sie umfasst eine schichtförmige negative Elektrode unmittelbar auf dem ersten elektrischen Leiter und eine schichtförmige positive Elektrode unmittelbar auf dem zweiten elektrischen Leiter;
c. sie umfasst einen schichtförmigen Separator;
wobei
d. die Elektroden und der Separator als Schichtstapel mit der Sequenz negative Elektrode / Separator / positive Elektrode ausgebildet sind, in welchem die negative Elektrode und der Separator sowie die positive Elektrode und der Separator jeweils über eine Grenzfläche miteinander in Verbindung stehen;
wobei
e. die Elektroden und der Separator mit einer Zinksalz-Lösung getränkt sind und wobei
f. die Grenzflächen zwischen den Elektroden und dem Separator durch mineralische Partikel gekennzeichnet sind, die eine für den Elektrolyten durchlässige Grenzschicht bilden.

10. Zink-Braunstein-Zelle nach Anspruch 9, **gekennzeichnet durch** mindestens eines der folgenden Merkmale:
a. Die negative Elektrode der Zelle umfasst die folgenden Komponenten in den folgenden Anteilen
| | |
|---|---|
| - Zinkpulver (Quecksilberfrei): | 81 bis 93 Gew.-% |
| - Additiv zur Viskositätseinstellung | 1 bis 7 Gew.-% |
| - Elektrodenbinder | 6 bis 13 Gew.-% |
b. Die positive Elektrode der Zelle umfasst die folgenden Komponenten in den folgenden Anteilen
| | |
|---|---|
| - Mangandioxid | 62 - 82 Gew.-% |
| - Leitmaterial | 5 - 35 Gew.-% |
| - Additiv zur Viskositätseinstellung | 2 - 10 Gew.-% |
| - Elektrodenbinder | 6 - 13 Gew.-% |

11. Zink-Braunstein-Zelle nach einem der Ansprüche 9 oder 10, **gekennzeichnet durch** mindestens eines der folgenden Merkmale:
a. Die mineralischen Partikel sind ausgewählt aus der Gruppe mit keramischen Partikeln, in Wasser nahezu oder vollständig unlöslichen Salzpartikeln, Glaspartikeln und Partikeln aus natürlichen Mineralien und Gesteinen wie Basalt.
b. Als mineralische Partikel werden CaCO₃-Partikel verwendet.
c. Die mineralischen Partikel weisen einen d50-Wert im Bereich von 0,8 µm bis 40 µm, bevorzugt im Bereich von 0,8 µm bis 15 µm, besonders bevorzugt im Bereich von 1,0 µm bis 5 µm, auf.
d. Die Grenzschicht umfasst ein mineralisches Partikel mit einer mittleren Partikelgröße (d50) < 500 nm, bevorzugt < 200 nm.
